# EUROPÄISCHE PATENTSCHRIFT

(11) **EP 0 999 623 B1**
(45) Veröffentlichungstag und Bekanntmachung des Hinweises auf die Patenterteilung: **18.02.2009**
(21) Anmeldenummer: 99117086.1
(22) Anmeldetag: 31.08.1999
(51) Int. Cl.: H02B 13/035

(54) **Druckgasisolierte Schaltanlage**
Gas-insulated switchgear
Installation de commutation à gaz isolant

(30) Priorität: 04.11.1998 DE 19850693
(43) Veröffentlichungstag der Anmeldung: 10.05.2000
(73) Patentinhaber: AREVA Sachsenwerk GmbH, 93055 Regensburg (DE)
(72) Erfinder: Reichl, Erwin, Dipl.-Ing.(FH), 93105 Tegernheim (DE)
(74) Vertreter: Dreiss, Fuhlendorf, Steimle & Becker

(56) Entgegenhaltungen:
- EP-A- 0 667 662
- EP-A- 0 667 663

## Beschreibung

Die vorliegende Erfindung betrifft eine druckgasisolierte Schaltanlage insbesondere für mehrphasige Mittelspannungen, mit mindestens zwei nebeneinander angeordneten Schaltfeldanordnungen, die mindestens einen mit Isoliergas gefüllten gasdichten Gasbehälter aufweisen, in dem Schaltelemente und mindestens eine Sammelschiene angeordnet sind, die für jede Phase der in der Schaltanlage zu schaltenden Spannung eine Leitung aufweist, wobei die Leitungen benachbarter Schaltfeldanordnungen in einem Verbindungsbereich miteinander elektrisch leitend verbunden sind.

Eine Schaltanlage mit den Merkmalen des Oberbegriffes des Anspruchs 1 ist aus EP 0 667 662 bekannt.

Druckgasisolierte Schaltanlagen werden aus mehreren nebeneinander angeordneten Schaltfeldanordnungen aufgebaut. Unter einer Schaltfeldanordnung wird nachfolgend sowohl ein einzelnes Schaltfeld als auch ein Schaltfeldblock (auch Schaltfeldmodul genannt) verstanden. Ein Schaltfeld weist ein oder mehrere Schaltelemente, bspw. Leistungsschalter, Trennschalter oder Erdungsschalter, und Sammelschienen auf. In einem Schaltfeldblock sind mehrere Schaltfelder zusammengeschlossen. Ein Schaltfeld beinhaltet lediglich eine Abzweigungsfunktion, wohingegen ein Schaltfeldblock mehrere Abzweigungsfunktionen beinhaltet. Die Gasbehälter der Schaltfeldanordnungen können in gasdichte Schotträume unterteilt sein, in denen jeweils eines oder mehrere Schaltelemente und/oder Sammelschienen angeordnet sind. Die einzelnen Schaltfeldanordnungen sind mittels der Sammelschienen miteinander elektrisch leitend verbunden.

An den Verbindungsstellen der einzelnen Schaltfeldanordnungen muß sowohl eine mechanische Verbindung der Gasbehälter als auch eine elektrische Verbindung der Sammelschienen hergestellt werden. Bei der Verbindung der einzelnen Schaltfeldanordnungen stellt die elektrische Verbindung der Sammelschienen den kritischen Punkt dar, da diese so ausgeführt werden muß, dass nach Abschluß der Verbindungsarbeiten das volle Isoliervermögen der Schaltanlage sichergestellt wird.

Aus dem Stand der Technik sind unterschiedliche Ausführungsformen einer elektrischen Verbindung der Sammelschienen von zwei nebeneinander angeordneten Schaltfeldanordnungen bekannt. Am häufigsten verbreitet sind Schaltanlagen, die einen durch einen Montagedeckel gasdicht verschließbaren von der übrigen Schaltfeldanordnung gasdicht abgeschotteten Sammelschienenkanal aufweisen, in den die Kontakte zu den Sammelschienen münden. Bei geöffnetem Montagedeckel werden die Sammelschienen in dem Sammelschienenkanal montiert und mit den Kontakten zu den Sammelschienen der Schaltfeldanordnung und einer benachbarten Schaltfeldanordnung elektrisch leitend verbunden. Nach dem Schließen des Montagedeckels wird der Sammelschienenkanal evakuiert und von außen mit Isoliergas befüllt. Diese bekannte Ausführungsform hat jedoch den Nachteil, dass nach dem Herstellen einer elektrisch leitenden Verbindung zwischen den Sammelschienen der einzelnen Schaltfeldanordnungen umfangreiche Gasarbeiten mit externen Gerätschaften (z. B. Gasflasche, Füllventil mit Druckreduziereinrichtung und Manometer für Flaschendruck und Fülldruck) nötig sind, um eine ausreichende Isolation des Sammelschienenkanals sicherzustellen. Ferner ist es von Nachteil, daß lediglich Teilbereiche der Schaltfeldanordnung werkseitig mit Isoliergas befüllt werden können, da eine werkseitige Spannungsprüfung, insbesondere dann, wenn auch die Trennschalter in dem Sammelschienenkanal angeordnet sind, lediglich in den mit Isoliergas befüllten Teilbereichen der Schaltfeldanordnung möglich ist.

Um Gasarbeiten mit externen Gerätschaften zu vermeiden, werden bspw. in der EP 0 563 535 und der DE 196 15 553 Schaltanlagen offenbart, bei denen die Sammelschienen nicht mittels Isoliergas sondern mittels einer Feststoffisolierung isoliert werden. Die Feststoffisolierung hat jedoch den Nachteil, dass sie zwangsläufig eine Vielzahl elektrisch hoch beanspruchter Stoßstellen in dem festen Isolierstoff aufweist und dass die montierte Sammelschiene einer Schaltfeldanordnung nicht bzw. nur mit sehr hohem Aufwand endgeprüft werden kann. Somit können die anerkannten Vorteile von druckgasisolierten Schaltanlagen, wie bspw. hohe Störunanfälligkeit und einfache Überprüfbarkeit der Isolationsfestigkeit durch Messung des Isoliergasdrucks, bei derartigen Schaltanlagen nicht konsequent genutzt werden, da das Herzstück der Schaltanlage, die Sammelschienen, feststoffisoliert ausgeführt ist.

Ein Vorschlag, ohne Verzicht auf eine konsequent gasisolierte Schaltanlage ebenfalls Gasarbeiten mit externen Gerätschaften bei der Herstellung einer elektrisch leitenden Verbindung zwischen den Sammelschienen einer Schaltfeldanordnung und den Sammelschienen einer benachbarten Schaltfeldanordnung zu vermeiden, wird in der DE 44 04 340 gemacht. Dort wird eine Schaltanlage mit Schaltfeldanordnungen offenbart, die werkseitig fest verschlossene und fertig gasgefüllte Gasbehälter aufweisen, die mit von außen bedienbaren Ventilanordnungen versehen sind. Auf die Ventilanordnungen von jeweils zwei benachbarten Schaltfeldanordnungen wird am Aufstellungsort der Schaltanlage ein Verbindungskanal gasdicht angeflanscht. In dem Verbindungskanal wird die elektrische Verbindung der Sammelschienen der benachbarten Schaltfeldanordnungen hergestellt. Nach Abschluß der Verbindungsarbeiten kann der Verbindungskanal durch Öffnen der Ventilanordnungen ohne Gasarbeiten mit externen Gerätschaften mit Isoliergas aus den Gasbehältern befüllt werden. Bei dieser Ausführungsform hat es sich als nachteilig erwiesen, dass zur Isolation der elektrischen Verbindung zwischen den Sammelschienen von benachbarten Schaltfeldanordnungen zusätzliche Behälter benötigt werden, die als Verbindungskanal an die Gasbehälter der benachbarten Schaltfeldanordnungen gasdicht angeflanscht werden müssen. Außerdem benötigen diese bekannten Schaltanlagen einen zusätzlichen Höhenbedarf für die elektrische Verbindung der Sammelschienen.

Die Aufgabe der vorliegenden Erfindung besteht deshalb darin, eine Schaltanlage der eingangs genannten Art dahingehend auszugestalten und weiterzubilden, dass zwischen den Sammelschienen von benachbarten Schaltfeldanordnungen auf einfache Weise eine elektrisch leitende Verbindung hergestellt werden kann, dass die elektrische Verbindung zwischen den Sammelschienen ohne Gasarbeiten mit externen Gerätschaften mit Isoliergas isolierbar ist und dass in der Schaltanlage für die elektrische Verbindung kein zusätzlicher Höhenbedarf besteht.

Zur Lösung dieser Aufgabe schlägt die Erfindung eine Schaltanlage mit den Merkmalen des Anspruchs 1 vor.

Die Leitungen der Sammelschiene sind vorzugsweise auf einer anderen als der Seite der Schaltfeldanordnung, auf der der mindestens eine Montageraum angeordnet ist, aus dem Gasbehälter herausgeführt.

Bei der erfindungsgemäßen Schaltanlage weisen die Gasbehälter der Schaltfeldanordnungen jeweils mindestens einen separaten Montageraum auf, der in den Gasbehälter integriert ist. Es ist denkbar, daß jede Leitung der Sammelschiene in einen eigenen Montageraum führt. Bei dieser Ausführungsform würde dann in jedem Montageraum für eine der Leitungen eine gesonderte elektrisch leitende Verbindung zu der entsprechenden Leitung der Sammelschiene der benachbarten Schaltfeldanordnung hergestellt werden. Üblicherweise führen jedoch sämtliche Leitungen einer Sammelschiene in einen gemeinsamen Montageraum. Der Teil des Gasbehälters außerhalb des Montageraums wird als Schaltanlagenraum bezeichnet.

Sämtliche Verbindungsarbeiten zur Herstellung der elektrischen Verbindung zwischen den Sammelschienen von benachbarten Schaltfeldanordnungen werden in dem Montageraum ausgeführt. Auch die Verbindungsarbeiten zur Herstellung einer mechanischen Verbindung zwischen den Gasbehältern der benachbarten Schaltfeldanordnungen können in dem Montageraum ausgeführt werden. Grundsätzlich ist es aber auch denkbar, sie außerhalb des Montageraums auszuführen. Der Montageraum ist für die Verbindungsarbeiten über die Montageöffnung bequem erreichbar. Nach Abschluß der Verbindungsarbeiten wird der Montageraum gasdicht verschlossen und durch Öffnen der Ventilanordnung mit Isoliergas befüllt. Die Ventilanordnung steht mit einem werkseitig mit Isoliergas befüllten Reservoir der Schaltfeldanordnung in Verbindung. Das kann ein gesondertes Reservoir oder aber auch der Gasbehälter selbst sein. Vor dem Befüllen des Montageraums kann dieser evakuiert werden. Beim Befüllen des Montageraums mit Isoliergas kann somit auf das Hantieren mit externen Gerätschaften ganz verzichtet werden. Die Ventilanordnung dient nicht nur dem Befüllen des Montageraums sondern weist auch einen derart großen Querschnitt auf, dass im Falle eines Störlichtbogens im Montageraum die entstehenden heißen Gase in den Schaltanlagenraum abgeleitet werden können, von dem aus sie dann über Druckentlastungsöffnungen nach außen entweichen können.

Die Leitungen der Sammelschienen von benachbarten Schaltfeldanordnungen werden durch die Verbindungsöffnung hindurch elektrisch leitend miteinander verbunden. Um sicherzustellen, dass das Isoliergas nach dem Befüllen des Montageraums aus diesem nicht entweicht, muß die Verbindungsöffnung des Montageraums bei nebeneinander angeordneten Schaltfeldanordnungen gasdicht verschlossen werden. Die Verbindungsöffnung kann bspw. durch ein spezielles Dichtungselement oder durch die Wand der benachbarten Schaltfeldanordnung gasdicht verschlossen werden. Das setzt voraus, daß die aus dem Gasbehälter der benachbarten Schaltfeldanordnung herausgeführten Leitungen der Sammelschienen gasdicht gegenüber dem Dichtungselement bzw. der Wand des Gasbehälters der benachbarten Schaltfeldanordnung abgedichtet sind.

Der Gasbehälter kann werkseitig fest verschlossen und fertig mit Isoliergas befüllt werden. Der Montageraum ist möglichst kleinvolumig ausgebildet, um den Gasdruck in dem Gasbehälter während des Befüllens des Montageraums mit Isoliergas aus dem Schaltanlagenraum nur geringfügig abzusenken und - falls der Montageraum vor dem Befüllen nicht evakuiert wird - nur eine möglichst geringe Luftmenge in das Isoliergas des Schaltanlagenraums unterzumischen. Andererseits muß der Montageraum ausreichend groß ausgebildet sein, damit die elektrischen und mechanischen Verbindungsarbeiten bequem durchgeführt werden können.

Der Montageraum der Schaltanlage kann je nach Ausgestaltung der Schaltfeldanordnung in einem oder mehreren der Schotträume innerhalb des Gasbehälters ausgebildet sein, bspw. in dem Sammelschienenraum, in dem Trennschalterraum, in dem Leistungsschalterraum oder in dem Erdungsschalterraum.

Die erfindungsgemäße Schaltanlage hat den Vorteil, dass zwischen den Sammelschienen von benachbarten Schaltfeldanordnungen auf einfache Weise eine elektrisch leitende Verbindung hergestellt werden kann. Dadurch dass der Montageraum in den Gasbehälter integriert ist, hat die erfindungsgemäße Schaltanlage für die elektrische Verbindung keinen zusätzlichen Höhenbedarf. Bei der erfindungsgemäßen Schaltanlage ist eine konsequent gasisolierte Sammelschienenverbindung realisiert worden, die jedoch auf offene und aufwendige Gasarbeiten zur Isolation der elektrischen Verbindung zwischen den Sammelschienen mittels Isoliergas verzichtet. Die elektrische Verbindung zwischen den Sammelschienen von benachbarten Schaltfeldanordnungen kann auf einfache Weise mit kostengünstigen Teilen hergestellt werden.

Gemäß einer vorteilhaften Weiterbildung der vorliegenden Erfindung wird vorgeschlagen, dass die Wand des Gasbehälters auf der Seite der Schaltfeldanordnung, auf der die Leitungen der Sammelschiene aus dem Gasbehälter herausgeführt sind, im Bereich der Leitungen mindestens eine Vertiefung aufweist, in die die Leitungen der Sammelschiene münden. Das hat den Vorteil, dass die Schaltfeldanordnung in dem Bereich, in dem sie eine Verbindung zu einer benachbarten Schaltfeldanordnung eingeht, keine über die Wand des Gasbehälters hinausstehenden Teile aufweist, wodurch der Transportraum für die einzelnen Schaltfeldanordnungen minimiert wird. Außerdem wird dadurch verhindert, dass über die Wand hinausstehende Teile beschädigt werden. Schließlich können einzelne Schaltfeldanordnungen aus einer Reihe mehrerer fertig nebeneinander angeordneter Schaltfeldanordnungen problemlos herausgenommen werden. Die Leitungen sind entweder in eine gemeinsame Vertiefung oder jeweils in eine eigene Vertiefung aus dem Gasbehälter der Schaltfeldanordnung herausgeführt. Die Enden der in die mindestens eine Vertiefung mündenden Leitungen der Sammelschiene schließen vorteilhafterweise bündig mit der die Vertiefung umgebenden Wand des Gasbehälters ab.

Vorteilhafterweise münden die Leitungen der Sammelschiene auf der einen Seite der Schaltfeldanordnung in eine gemeinsame Vertiefung und auf der anderen Seite der Schaltfeldanordnung in einen gemeinsamen Montageraum.

Gemäß einer bevorzugten Ausführungsform wird vorgeschlagen, dass in der Verbindungsöffnung mindestens ein Kontaktelement zur Herstellung der elektrisch leitenden Verbindung zwischen den Leitungen der Sammelschiene der Schaltfeldanordnung und den Leitungen der Sammelschiene der benachbarten Schaltfeldanordnung angeordnet ist. Durch die Kontaktelemente kann eine die Leitungen der Sammelschienen der benachbarten Schaltfeldanordnungen überlappende elektrisch leitende Verbindung hergestellt werden. Das Kontaktelement sollte auch so ausgebildet sein, dass es geringe Fluchtungsfehler und temperaturbedingte Längenänderungen der Leitungen ausgleichen kann. Das Kontaktelement kann bspw. als fest verschraubtes Dehnungsband oder als eine feste Schiene ausgebildet sein, die mit einer federnd vorgespannten Schraubverbindung ausgestattet ist.

Das Kontaktelement ist vorzugsweise rohrförmig und aus einem elektrisch leitenden Material ausgebildet. Vorteilhafterweise ist das Kontaktelement als eine Rohrleitung ausgebildet, die der Länge nach in zwei Rohrleitungssegmente unterteilt ist, die auf den Leitungen der Sammelschiene der benachbarten Schaltfeldanordnungen axial verschiebbar und federnd verspannt angeordnet sind.

Die benachbarten Schaltfeldanordnungen sind gemäß einer anderen bevorzugten Ausführungsform derart miteinander mechanisch verbunden, dass der Montageraum über die Verbindungsöffnung mit der Vertiefung gasdicht in Verbindung steht. Vorteilhafterweise sind die benachbarten Schaltfeldanordnungen mittels Verbindungselemente derart miteinander mechanisch verbunden, dass ein zwischen den Gasbehältern der benachbarten Schaltfeldanordnungen um die mindestens eine Verbindungsöffnung und die mindestens eine Vertiefung angeordnetes Dichtungselement zwischen den Gasbehältern gasdicht eingespannt ist. Das oder die Dichtungselemente sorgen für eine gasdichte Verbindung zwischen dem Montageraum und der Vertiefung, die in der gegenüberliegenden Wand der benachbarten Schaltfeldanordnung ausgebildet ist, durch die die Verbindungsöffnung des Montageraums verschlossen ist. Durch den Einsatz lediglich eines Dichtungselements, das alle Verbindungsöffnungen der Schaltfeldanordnung und alle Vertiefungen der benachbarten Schaltfeldanordnung umgibt, muß nur eine gasdichte Flanschverbindung zwischen den benachbarten Schaltfeldanordnungen hergestellt werden.

Gemäß einer besonders bevorzugten Ausführungsform der vorliegenden Erfindung ist die Ventilanordnung zum Befüllen des Montageraums mit Isoliergas zwischen dem Montageraum und dem Gasbehälter von außen bedienbar angeordnet. Nach Abschluß der Verbindungsarbeiten und nach einem gasdichten Verschließen des Monatageraums kann dieser dann durch Öffnen der Ventilanordnung mit Isoliergas aus dem Gasbehälter befüllt werden. Falls gewünscht kann der Montageraum vor dem Befüllen mit Isoliergas evakuiert werden. Erfahrungsgemäß wirkt sich die geringe Menge in dem Montageraum eingeschlossener Luft jedoch nicht nachteilig auf das Isoliervermögen des Isoliergases in dem Gasbehälter und dem Montageraum aus.

Alternativ wird vorgeschlagen, die Ventilanordnung zum Befüllen des Montageraums mit Isoliergas bei nebeneinander angeordneten Schaltfeldanordnungen von außen zugänglich in einer Wand des Montageraums anzuordnen. Bei dieser Ausführungsform kann der Montageraum nach Abschluß der Verbindungsarbeiten und nach einem gasdichten Verschließen des Monatageraums von außen mit Isoliergas befüllt werden.

Eine bevorzugte Ausführungsform der vorliegenden Erfindung wird im Folgenden anhand der Zeichnungen näher erläutert. Es zeigen:
- Fig. 1: eine erfindungsgemäße Schaltanlage schematisch dargestellt in einer Ansicht von vorne;
- Fig. 2: eine Schaltfeldanordnung der erfindungsgemäßen Schaltanlage aus Fig. 1 schematisch dargestellt in einer Seitenansicht;
- Fig. 3: die Schaltfeldanordnung aus Fig. 2 in einer Ansicht im Schnitt von vorne,
- Fig. 4: eine Sammelschiene der Schaltfeldanordnung aus Fig. 3 im Ausschnitt;
- Fig. 5a: die Sammelschiene der Schaltfeldanordnung aus Fig. 2 in einer ersten Ausführungsform im Ausschnitt;
- Fig. 5b: die Sammelschiene der Schaltfeldanordnung aus Fig. 5a im Längsschnitt;
- Fig. 5c: die Sammelschiene der Schaltfeldanordnung aus Fig. 5a im Querschnitt;
- Fig. 6a: die Sammelschiene der Schaltfeldanordnung aus Fig. 2 in einer zweiten Ausführungsform im Ausschnitt;
- Fig. 6b: die Sammelschiene der Schaltfeldanordnung aus Fig. 6a im Längsschnitt;
- Fig. 6c: die Sammelschiene der Schaltfeldanordnung aus Fig. 6a im Querschnitt;

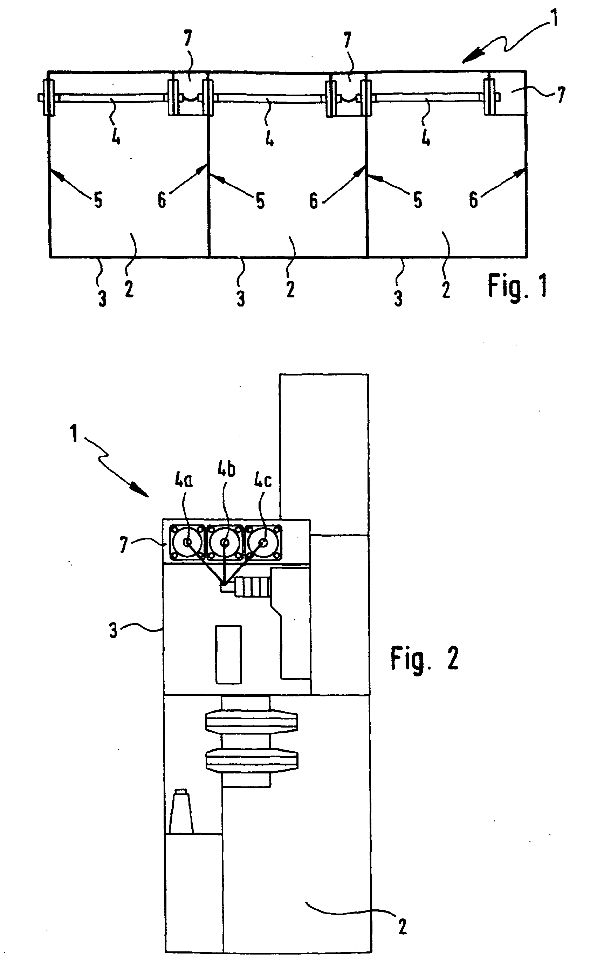

In Fig. 1 ist eine erfindungsgemäße druckgasisolierte Schaltanlage in ihrer Gesamtheit mit dem Bezugszeichen 1 gekennzeichnet. Die Schaltanlage 1 dient insbesondere zum Umspannen von mehrphasigen Mittelspannungen. Sie weist drei nebeinander angeordnete Schaltfeldanordnungen 2 auf. Jede der Schaltfeldanordnungen 2 weist einen gasdichten Gasbehälter 3 auf, in dem Schaltelemente und mindestens eine Sammelschiene 4 angeordnet sind. Zur Isolation der Schaltelemente und der Sammelschienen 4 ist der Gasbehälter 3 mit Isoliergas gefüllt. Die Sammelschienen 4 der Schaltfeldanordnungen 2 weisen für jede Phase der in der Schaltanlage 1 zu schaltenden Spannung eine gesonderte Leitung 4a, 4b, 4c auf (vgl. Fig. 2). In Fig. 1 sind die einzelnen Leitungen 4a, 4b, 4c in der Zeichenebene hintereinander angeordnet. Benachbarte Schaltfeldanordnungen 2a, 2b sind mechanisch miteinander verbunden. Die Leitungen 4a, 4b, 4c der Sammelschienen 4 der benachbarten Schaltfeldanordnungen 2a, 2b sind elektrisch leitend miteinander verbunden.

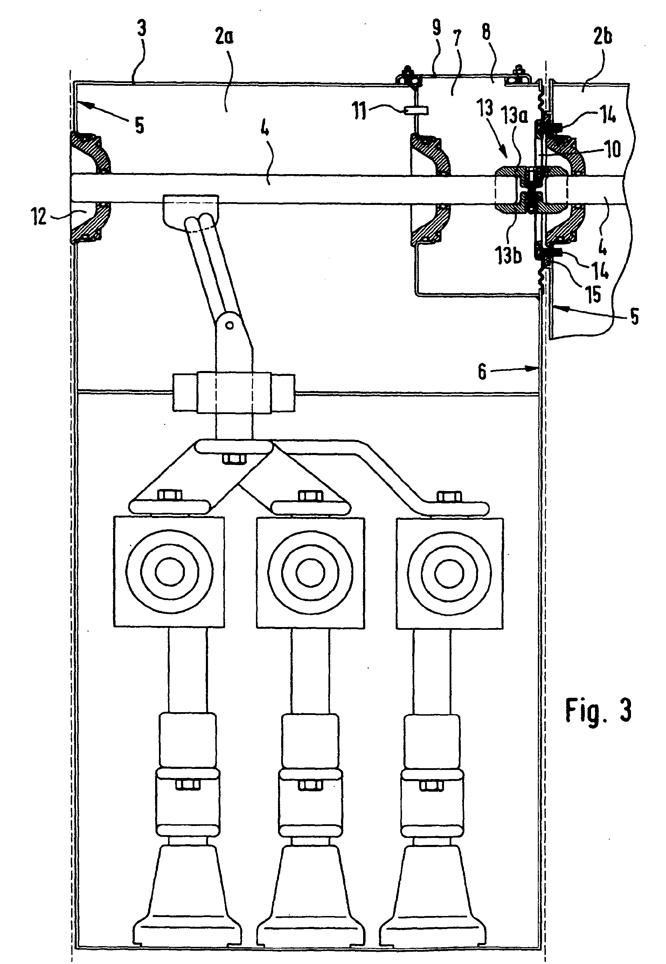

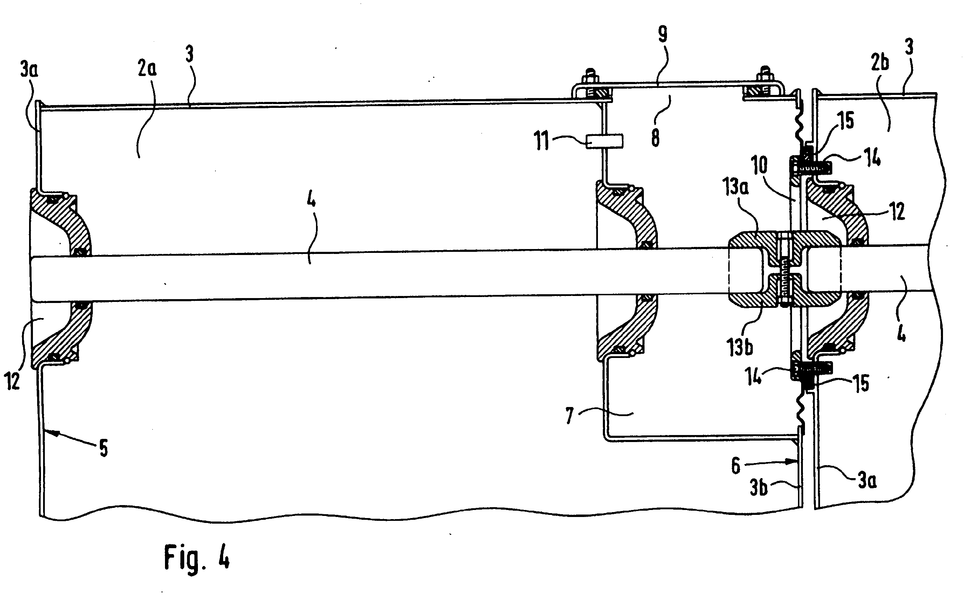

Die Leitungen 4a, 4b, 4c der Sammelschiene 4 der ersten Schaltfeldanordnung 2a sind auf einer ersten Seite 5 der Schaltfeldanordnung 2a aus dem Gasbehälter 3 herausgeführt. Auf der anderen Seite 6 der Schaltfeldanordnung 2a münden die Leitungen 4a, 4b, 4c in einen von dem Gasbehälter 3 gasdicht abgetrennten gasdichten Montageraum 7. Der Montageraum 7 ist innerhalb des Gasbehälters 3 angeordnet. Der Teil des Gasbehälters 3 außerhalb des Montageraums 7 wird als Schaltanlagenraum bezeichnet. Der Montageraum 7 weist eine bei nebeneinander angeordneten Schaltfeldanordnungen 2a, 2b von außen zugängliche Montageöffnung 8 auf, die mit einem Deckel 9 gasdicht verschließbar ist (vgl. Fig. 3 und Fig. 4). Darüber hinaus weist der Montageraum 7 eine Verbindungsöffnung 10 auf, die bei nebeneinander angeordneten Schaltfeldanordnungen 2a, 2b den aus dem Gasbehälter 3 der benachbarten Schaltfeldanordnung 2b herausgeführten Leitungen 4a, 4b, 4c der Sammelschiene 4 zugewandt ist. Schließlich weist der Montageraum 7 eine Ventilanordnung 11 zum Befüllen des Montageraums 7 mit Isoliergas auf. Die Ventilanordnung 11 ist in den Fig. 3 und 4 als ein von außen betätigbares Ventil ausgebildet, das nach dem Abschluß der mechanischen und elektrischen Verbindungsarbeiten, d. h. bei gasdicht verschlossenem Montageraum 7 von außen geöffnet wird, so daß Isoliergas aus dem Schaltanlagenraum in den Montageraum 7 strömen kann.

Die in Fig. 3 dargestellte Schaltfeldanordnung 2a weist im Gegensatz zu den Schaltfeldanordnungen 2 der Fig. 1 und 2 eine zusätzliche Schottwand zwischen dem Leistungschalterraum und dem Raum für die Sammelschienen 4 und den Trennschalter auf.

Eine Wand 3a auf der Seite 5 des Gasbehälters 3 der Schaltfeldanordnung 2a, aus der die Leitungen 4a, 4b, 4c der Sammelschiene 4 aus dem Gasbehälter 3 herausgeführt sind, weist im Bereich der Leitungen 4a, 4b, 4c drei Vertiefungen 12 auf, in die jeweils eine der Leitungen 4a, 4b, 4c der Sammelschiene 4 mündet. Die Enden der in die Vertiefungen 12 mündenden Leitungen 4a, 4b, 4c der Sammelschiene 4 schließen bündig mit der die Vertiefungen 12 umgebenden Wand 3a des Gasbehälters 3 ab. Alternativ können die Leitungen 4a, 4b, 4c auch gegenüber der Wand 3a leicht in das Innere des Gasbehälters 3 zurückversetzt sein.

In der Verbindungsöffnung 10 ist für jede Leitung 4a, 4b, 4c ein Kontaktelement 13 zur Herstellung einer elektrisch leitenden Verbindung zwischen den Leitungen 4a, 4b, 4c der Sammelschiene 4 der Schaltfeldanordnung 2a und den Leitungen 4a, 4b, 4c der Sammelschiene 4 der benachbarten Schaltfeldanordnung 2b angeordnet. Das Kontaktelement 13 besteht aus einem elektrisch leitenden Material. Es ist als eine Rohrleitung ausgebildet, die der Länge nach in zwei Rohrleitungssegmente 13a, 13b unterteilt ist. Die Rohrleitungssegmente 13a, 13b sind auf den Leitungen 4a, 4b, 4c der Sammelschienen 4 der benachbarten Schaltfeldanordnungen 2a, 2b axial verschiebbar und federnd verspannt angeordnet. Das Kontaktelement 13 kann auch beliebig anders aufgebaut sein und bspw. aus mehr als zwei Rohrleitungssegmenten 13a, 13b bestehen. Es muß jedoch immer so ausgestaltet sein, daß es den Abstand zwischen Enden der Leitungen 4a, 4b, 4c der Sammelschienen 4 zweier benachbarter Schaltfeldanordnungen 2a, 2b überbrückt. Der Abstand ist so gewählt, daß er nach dem Entfernen des Kontaktelements 13 groß genug ist, daß er im mit Isoliergas gefüllten Zustand die Anforderungen an die Spannungsfestigkeit der Schaltfeldanordnung 2 erfüllt. Der Abstand bildet somit eine Trennstrecke die z. B. bei Arbeiten an der Schaltanlage hergestellt werden kann und bei anstehender Sammelschienenspannung ein Arbeiten an dem abgetrennten Teil der Schaltanlage 1 erlaubt.

Die benachbarten Schaltfeldanordnungen 2a, 2b sind derart miteinander mechanisch verbunden, dass der Montageraum 7 über die Verbindungsöffnung 10 mit den Vertiefungen 12 gasdicht in Verbindung steht. Zur mechanischen Verbindung der benachbarten Schaltfeldanordnungen 2a, 2b werden Verbindungselemente 14 verwendet. Die Verbindungselemente 14 sind vorzugsweise als Schrauben ausgebildet. Zwischen einer Wand 3b des Gasbehälters 3 der Schaltfeldanordnung 2a und der Wand 3a des Gasbehälters 3 der benachbarten Schaltfeldanordnung 2b ist um die Verbindungsöffnung 10 und um die Vertiefungen 12 herum ein Dichtungselement 15 angeordnet. Das Dichtungselement 15 ist derart zwischen den Wänden 3a und 3b eingespannt, dass der Montageraum 7 durch die Wand 3a des Gasbehälters 3 der benachbarten Schaltfeldanordnung 2b gasdicht verschlossen ist.

Die Wand 3b auf der Seite 6 des Gasbehälters 3 der Schaltfeldanordnung 2a, an der der Montageraum 7 ausgebildet ist, ist außen um die mechanische Verbindung der benachbarten Schaltfeldanordnungen 2a, 2b herum teilweise nachgiebig ausgebildet. Der nachgiebige Bereich 16 der Wand 3b besteht aus einem dünnen Blech mit einem wellenförmigen Profil.

Um nun aus den einzelnen Schaltfeldanordnungen 2 eine erfindungsgemäße Schaltanlage 1 aufzubauen, werden die Schaltfeldanordnungen 2 zunächst nebeneinander angeordnet. Die Deckel 9 der Montageräume 7 der Schaltfeldanordnungen 2 werden geöffnet. Zwischen jeweils zwei benachbarten Schaltfeldanordnungen 2a, 2b wird in dem Montageraum 7 mittels der Verbindungselemente 14 eine mechanische Verbindung hergestellt. Mittels der Kontaktelemente 13 wird durch die Verbindungsöffnung 10 des Montageraums 7 hindurch zwischen den Leitungen 4a, 4b, 4c der Sammelschienen 4 der benachbarten Schaltfeldanordnungen 2a, 2b eine elektrisch leitende Verbindung hergestellt. Nach Abschluss der Verbindungsarbeiten werden die Montageräume 7 mit den Deckeln 9 gasdicht verschlossen. Die Verbindungsöffnungen 10 der Montageräume 7 sind durch die Wände 3a der benachbarten Schaltfeldanordnungen 2b gasdicht verschlossen. Dann werden die Ventilanordnungen 11, die zwischen den Montageräumen 7 und den Gasbehältern 3 angeordnet sind, von außen betätigt, so dass der in den Gasbehältern 3 enthaltene Überschuß an Isoliergas in die Montageräume 7 strömen kann. Vor dem Befüllen des Montageraums 7 mit Isoliergas kann dieser auch evakuiert werden.

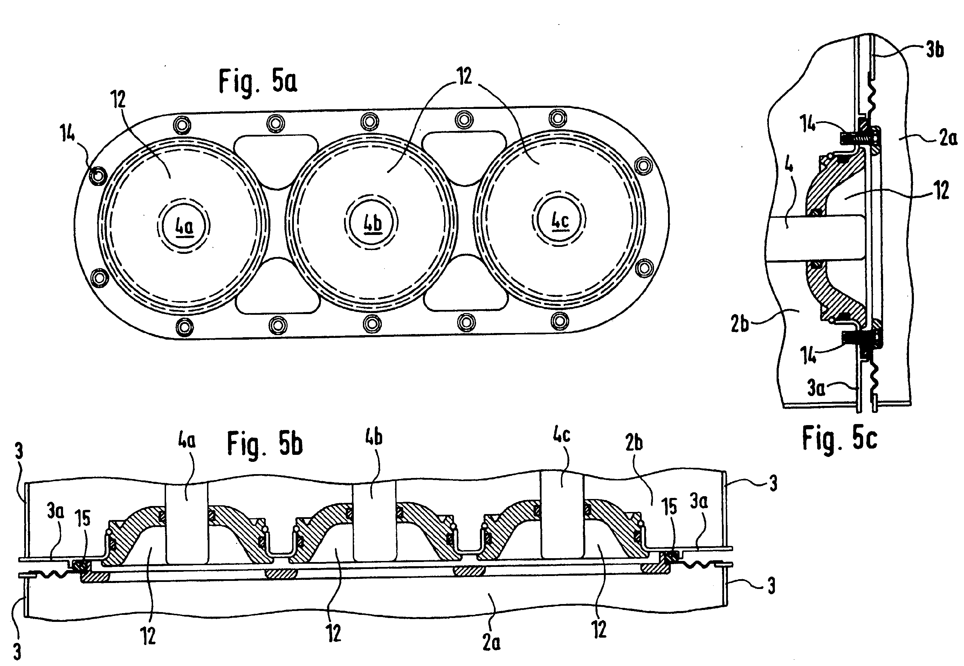

In den Fig. 5a bis 5c sind die drei Leitungen 4a, 4b, 4c der Sammelschiene 4 dargestellt, wie sie seitlich an der Wand 3a der Schaltfeldanordnungen 2 aus den Gasbehältern 3 heraustreten. Die Leitungen 4a, 4b, 4c der Sammelschiene 4 münden jeweils in eine gesonderte Vertiefung 12. Die Verbindungselemente 14 sind rings um die Vertiefungen 12 herum angeordnet.

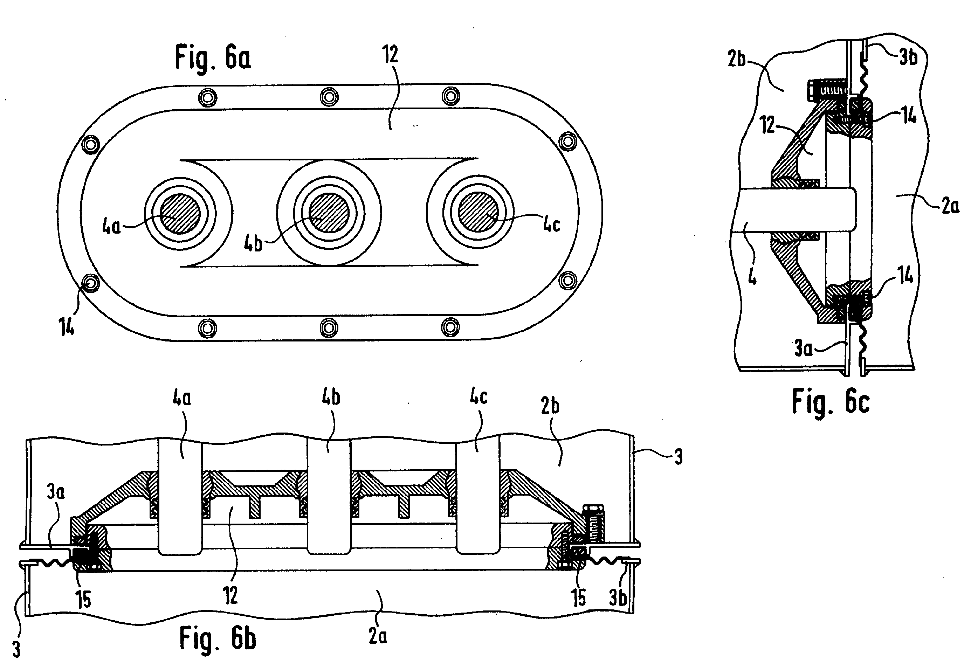

Bei der Ausführungsform gemäß den Fig. 6a bis 6c münden die Leitungen 4a, 4b, 4c in eine gemeinsame Vertiefung 12. Bei dieser Ausführungsform muss lediglich eine Flanschverbindung zwischen der Wand 3b der Schaltfeldanordnung 2a und der Wand 3a der Schaltfeldanordnung 2b hergestellt werden.

## Patentansprüche

1. Druckgasisolierte Schaltanlage (1), insbesondere für mehrphasige Mittelspannungen, mit mindestens zwei nebeneinander angeordneten Schaltfeldanordnungen (2a, 2b), die jeweils einen mit Isoliergas gefüllten gasdichten Gasbehälter (3) aufweisen, in dem Schaltelemente und mindestens eine Sammelschiene (4) angeordnet sind, die für jede Phase der in der Schaltanlage (1) zu schaltenden Spannung eine Leitung (4a, 4b, 4c) aufweist, wobei die Leitungen (4a, 4b, 4c) benachbarter Schaltfeldanordnungen (2a, 2b) elektrisch leitend miteinander verbunden sind, wobei die Leitungen (4a, 4b, 4c) der Sammelschiene (4) auf einer Seite (6) der Schaltfeldanordnung (2a) in mindestens einen von dem Gasbehälter (3) gasdicht abgetrennten gasdichten Montageraum (7) münden,
- der eine bei nebeneinander angeordneten Schaltfeldanordnungen (2a, 2b) von außen zugängliche Montageöffnung (8) aufweist, die mit einem Deckel (9) gasdicht verschließbar ist,
- der eine gasdicht verschließbare Verbindungsöffnung (10) aufweist, die bei nebeneinander angeordneten Schaltfeldanordnungen (2a, 2b) den aus dem Gasbehälter (3) der benachbarten Schaltfeldanordnung (2b) herausgeführten Leitungen (4a, 4b, 4c) zugewandt ist,
- der eine Ventilanordnung (11) zum Befüllen des Montageraums (7) mit Isoliergas aufweist, **dadurch gekennzeichnet, dass** der Montageraum (7)
- innerhalb des Gasbehälters (3) angeordnet ist.

2. Schaltanlage (1) nach Anspruch 1, **dadurch gekennzeichnet, dass** die Leitungen (4a, 4b, 4c) der Sammelschiene (4) auf einer anderen Seite (5) als der Seite (6) der Schaltfeldanordnung (2a), auf der der mindestens eine Montageraum (7) angeordnet ist, aus dem Gasbehälter (3) herausgeführt sind.

3. Schaltanlage (1) nach Anspruch 2, **dadurch gekennzeichnet, dass** die Wand (3a) des Gasbehälters (3) auf der Seite (5) der Schaltfeldanordnung (2a), auf der die Leitungen (4a, 4b, 4c) der Sammelschiene (4) aus dem Gasbehälter (3) herausgeführt sind, im Bereich der Leitungen (4a, 4b, 4c) mindestens eine Vertiefung (12) aufweist, in die die Leitungen (4a, 4b, 4c) der Sammelschiene (4) münden.

4. Schaltanlage (1) nach.Anspruch 3, **dadurch gekennzeichnet, dass** die Enden der in die mindestens eine Vertiefung (12) mündenden Leitungen (4a, 4b, 4c) der Sammelschiene (4) bündig mit der die Vertiefung (12) umgebenden Wand (3a) des Gasbehälters (3) abschließen.

5. Schaltanlage (1) nach Anspruch 3 oder 4, **dadurch gekennzeichnet, dass** in der Verbindungsöffnung (10) mindestens ein Kontaktelement (13) zur Herstellung der elektrisch leitenden Verbindung zwischen den Leitungen (4a, 4b, 4c) der Sammelschiene (4) der Schaltfeldanordnung (2a) und den Leitungen (4a, 4b, 4c) der Sammelschiene (4) der benachbarten Schaltfeldanordnung (2b) angeordnet ist.

6. Schaltanlage (1) nach Anspruch 5, **dadurch gekennzeichnet, dass** das Kontaktelement (13) rohrförmig und aus einem elektrisch leitenden Material ausgebildet ist.

7. Schaltanlage (1) nach Anspruch 6, **dadurch gekennzeichnet, dass** das Kontaktelement (13) als eine Rohrleitung ausgebildet ist, die der Länge nach in zwei Rohrleitungssegmente (13a, 13b) unterteilt ist, die auf den Leitungen (4a, 4b, 4c) der Sammelschienen (4) der benachbarten Schaltfeldanordnungen (2a, 2b) axial verschiebbar und federnd verspannt angeordnet sind.

8. Schaltanlage (1) nach einem der Ansprüche 3 bis 7, **dadurch gekennzeichnet, dass** die benachbarten Schaltfeldanordnungen (2a, 2b) derart miteinander mechanisch verbunden sind, dass der Montageraum (7) über die Verbindungsöffnung (10) mit der Vertiefung (12) gasdicht in Verbindung steht.

9. Schaltanlage (1) nach Anspruch 8, **dadurch gekennzeichnet, dass** die benachbarten Schaltfeldanordnungen (2a, 2b) mittels Verbindungselemente (14) derart miteinander mechanisch verbunden sind, dass ein zwischen den Gasbehältern (3) der benachbarten Schaltfeldanordnungen (2a, 2b) um die mindestens eine Verbindungsöffnung (10) und die mindestens eine Vertiefung (12) angeordnetes Dichtungselement (15) zwischen den Gasbehältern (3) gasdicht eingespannt ist.

10. Schaltanlage (1) nach einem der Ansprüche 1 bis 9, **dadurch gekennzeichnet, dass** die Leitungen (4a, 4b, 4c) der Sammelschiene (4) auf der einen Seite (5) der Schaltfeldanordnung (2a) in eine gemeinsame Vertiefung (12) und auf der anderen Seite (6) der Schaltfeldanordnung (2a) in einen gemeinsamen Montageraum (7) münden.

11. Schaltanlage (1) nach einem der Ansprüche 1 bis 10, **dadurch gekennzeichnet, dass** die Ventilanordnung (11) zum Befüllen des Montageraums (7) mit Isoliergas zwischen dem Montageraum (7) und dem Gasbehälter (3) von außen bedienbar angeordnet ist.

12. Schaltanlage (1) nach einem der Ansprüche 1 bis 11, **dadurch gekennzeichnet, dass** die Ventilanordnung (11) zum Befüllen des Montageraums (7) mit Isoliergas bei nebeneinander angeordneten Schaltfeldanordnungen (2) von außen zugänglich in einer Wand des Montageraums (7) angeordnet ist.

## Claims

1. Compressed gas-insulated switchgear (1), in particular for multiphase medium voltages, comprising at least two switch panel arrangements (2a, 2b) which are arranged side by side and have in each case a gas-tight gas container (3) which is filled with insulating gas and in which switching elements and at least one busbar (4) which has a line (4a, 4b, 4c) for each phase of the voltage to be switched in the switchgear (1) are arranged, the lines (4a, 4b, 4c) of adjacent switch panel arrangements (2a, 2b) having an electrically conductive connection to one another, the lines (4a, 4b, 4c) of the busbar (4) on one side (6) of the switch panel arrangement (2a) leading into at least one gas-tight assembly space (7) which is separated in a gas-tight manner from the gas container (3),
- which has an assembly opening (8) which is accessible from outside in the case of switch panel arrangements (2a, 2b) arranged side by side and can be closed in a gas-tight manner with a cover (9),
- which has a connecting opening (10) which can be sealed gas-tight and, in the case of switch panel arrangements (2a, 2b) arranged side by side, faces the lines (4a, 4b, 4c) led out of the gas container (3) of the adjacent switch panel arrangement (2b),
- which has a valve arrangement (11) for filling the assembly space (7) with insulating gas,
**characterized in that** the assembly space (7) is arranged inside the gas container (3).

2. Switchgear (1) according to Claim 1, **characterized in that** the lines (4a, 4b, 4c) of the busbar (4) on a side (5) other than that side (6) of the switch panel arrangement (2a) on which the at least one assembly space (7) is arranged are led out of the gas container (3).

3. Switchgear (1) according to Claim 2, **characterized in that** the wall (3a) of the gas container (3) on that side (5) of the switch panel arrangement (2a) on which the lines (4a, 4b, 4c) of the busbar (4) are led out of the gas container (3) has, in the region of the lines (4a, 4b, 4c), at least one depression (12) into which the lines (4a, 4b, 4c) of the busbar (4) lead.

4. Switchgear (1) according to Claim 3, **characterized in that** the ends of the lines (4a, 4b, 4c) of the busbar (4) which lead into the at least one depression (12) are flush with that wall (3a) of the gas container (3) which surrounds the depression (12).

5. Switchgear (1) according to Claim 3 or 4, **characterized in that** at least one contact element (13) for producing the electrically conductive connection between the lines (4a, 4b, 4c) of the busbar (4) of the switch panel arrangement (2a) and the lines (4a, 4b, 4c) of the busbar (4) of the adjacent switch panel arrangement (2b) is arranged in the connecting opening (10).

6. Switchgear (1) according to Claim 5, **characterized in that** the contact element (13) is tubular and is formed from an electrically conductive material.

7. Switchgear (1) according to Claim 6, **characterized in that** the contact element (13) is in the form of a pipeline which is divided lengthwise into two pipeline segments (13a, 13b) which are arranged in an axially displaceable and spring-tensioned manner on the lines (4a, 4b, 4c) of the busbars (4) of the adjacent switch panel arrangements (2a, 2b).

8. Switchgear (1) according to any of Claims 3 to 7, **characterized in that** the adjacent switch panel arrangements (2a, 2b) are mechanically connected to one another in such a way that the assembly space (7) is connected gas-tight to the depression (12) via the connecting opening (10).

9. Switchgear (1) according to Claim 8, **characterized in that** the adjacent switch panel arrangements (2a, 2b) are mechanically connected to one another by means of connecting elements (14) in such a way that a sealing element (15) arranged between the gas containers (3) of the adjacent switch panel arrangements (2a, 2b) around the at least one connecting opening (10) and the at least one depression (12) is clamped gas-tight between the gas containers (3).

10. Switchgear (1) according to any of Claims 1 to 9, **characterized in that** the lines (4a, 4b, 4c) of the busbar (4) lead into a common depression (12) on one side (5) of the switch panel arrangement (2a) and into a common assembly space (7) on the other side (6) of the switch panel arrangement (2a).

11. Switchgear (1) according to any of Claims 1 to 10, **characterized in that** the valve arrangement (11) for filling the assembly space (7) with insulating gas is arranged between the assembly space (7) and the gas container (3) so that it can be operated from outside.

12. Switchgear (1) according to any of Claims 1 to 11, **characterized in that,** in the case of switch panel arrangements (2) arranged side by side, the valve arrangement (11) for filling the assembly space (7) with insulating gas is arranged in a wall of the assembly space (7) so as to be accessible from outside.

## Revendications

1. Installation de commutation (1) isolée des gaz comprimés, en particulier pour des moyennes tensions multiphases, comportant au moins deux systèmes de tableau de commande (2a, 2b) juxtaposés, qui comportent chacun un réservoir de gaz (3) étanche aux gaz et rempli de gaz isolant, dans lequel sont disposés des éléments de commutation et au moins un rail collecteur (4), qui comporte une ligne (4a, 4b, 4c) pour chaque phase de la tension à commander dans l'installation de commutation (1), les lignes (4a, 4b, 4c) dans des systèmes de tableau de commande (2a, 2b) adjacents étant reliées entre elles de manière électroconductrice, les lignes (4a, 4b, 4c) du rail collecteur (4) débouchant sur un côté (6) du système de tableau de commande (2a) dans au moins un espace de montage (7) étanche aux gaz et séparé de manière étanche aux gaz du réservoir de gaz (3), lequel espace de montage comporte une ouverture de montage (8) qui, en présence de systèmes de tableau de commande (2a, 2b) juxtaposés, est accessible de l'extérieur et qui peut être fermée de manière étanche aux gaz par un couvercle (9), lequel espace de montage comporte une ouverture de liaison (10), qui peut être fermée de manière étanche aux gaz et qui, en présence de systèmes de tableau de commande (2a, 2b) juxtaposés, est orientée vers les lignes (4a, 4b, 4c) menées hors du réservoir de gaz (3) du système de tableau de commande (2b) adjacent, lequel espace de montage comporte un système de vanne (11) pour remplir l'espace de montage (7) avec le gaz isolant, **caractérisée en ce que** l'espace de montage (7) est située à l'intérieur du réservoir de gaz (3).

2. Installation de commutation (1) selon la revendication 1, **caractérisée en ce que** les lignes (4a, 4b, 4c) du rail collecteur (4) sont guidées hors du réservoir de gaz (3) sur un autre côté (5), différent du côté (6) du système de tableau de commande (2a) sur lequel est disposé ledit au moins un espace de montage (7).

3. Installation de commutation (1) selon la revendication 2, **caractérisée en ce que** la paroi (3a) du réservoir de gaz (3), sur le côté (5) du système de tableau de commande (2a), sur lequel les lignes (4a, 4b, 4c) du rail collecteur (4) sont guidées hors du réservoir de gaz (3), comporte au moins un creux (12), dans lequel débouchent les lignes (4a, 4b, 4c) du rail collecteur (4).

4. Installation de commutation (1) selon la revendication 3, **caractérisée en ce que** les extrémités des lignes (4a, 4b, 4c) du rail collecteur (4), lesquelles débouchent dans ledit au moins un creux (12), sont situées à fleur de la paroi (3a) du réservoir de gaz (3), qui entoure le creux (12).

5. Installation de commutation (1) selon la revendication 3 ou 4, **caractérisée en ce que** dans l'ouverture de liaison (10) est disposé au moins un élément de contact (13) destiné à établir la liaison électroconductrice entre les lignes (4a, 4b, 4c) du rail collecteur (4) du système de tableau de commande (2a) et les lignes (4a, 4b, 4c) du rail collecteur (4) du système de tableau de commande (2b) adjacent.

6. Installation de commutation (1) selon la revendication 5, **caractérisée en ce que** l'élément de contact (13) est un élément tubulaire réalisé dans un matériau électroconducteur.

7. système de tableau de commande (1) selon la revendication 6, **caractérisée en ce que** l'élément de contact (13) est réalisé sous forme de conduit tubulaire qui est divisé, dans le sens de la longueur, en deux segments tubulaires (13a, 13b), qui sont disposés de manière mobile axialement et en étant serrés de manière flexible sur les lignes (4a, 4b, 4c) du rail collecteur (4) des systèmes de tableau de commande (2a, 2b) adjacents.

8. Installation de commutation (1) selon l'une quelconque des revendications 3 à 7, **caractérisée en ce que** les systèmes de tableau de commande (2a, 2b) adjacents sont reliés mécaniquement entre eux de telle sorte que l'espace de montage (7) est relié de manière étanche aux gaz avec le creux (12) via l'ouverture de liaison (10).

9. Installation de commutation (1) selon la revendication 8, **caractérisée en ce que** les systèmes de tableau de commande (2a, 2b) adjacents sont reliés mécaniquement entre eux par des éléments d'assemblage (14), de telle sorte qu'un élément d'étanchéité (15), disposé entre les réservoirs de gaz (3) des systèmes de tableau de commande (2a, 2b) adjacents autour de ladite au moins une ouverture de liaison (10) et ledit au moins un creux (12), est bloquée de manière étanche aux gaz entre les réservoirs de gaz (3).

10. Installation de commutation (1) selon l'une quelconque des revendications 1 à 9, **caractérisée en ce que** les lignes (4a, 4b, 4c) du rail collecteur (4) débouchent sur le côté (5) du système de tableau de commande (2a) dans un creux (12) commun et débouchent sur l'autre côté (6) du système de tableau de commande (2a) dans un espace de montage (7) commun.

11. Installation de commutation (1) selon l'une quelconque des revendications 1 à 10, **caractérisée en ce que** le système de vanne (11), destiné à remplir l'espace de montage (7) avec le gaz isolant, est disposé entre l'espace de montage (7) et le réservoir de gaz (3) de manière apte à être commandé de l'extérieur.

12. Installation de commutation (1) selon l'une quelconque des revendications 1 à 11, **caractérisée en ce que,** en présence de systèmes de tableau de commande (2) juxtaposés, le système de vanne (11), destiné à remplir l'espace de montage (7) avec le gaz isolant, est disposé de manière accessible de l'extérieur dans une paroi de l'espace de montage (7).
